# EUROPEAN PATENT APPLICATION

(11) **EP 4 783 141 A1**
(43) Date of publication of application: **29.07.2026**
(21) Application number: 26152936.6
(22) Date of filing: 20.01.2026
(51) Int. Cl.: G08B 21/06

(54) **WARNING DEVICE, WARNING METHOD, AND COMPUTER PROGRAM**

(30) Priority: 24.01.2025 JP 2025010816
(71) Applicant: Toyota Jidosha Kabushiki Kaisha, Toyota-shi, Aichi-ken 471-8571 (JP)
(72) Inventor: TANAKA, Yuki, TOYOTA-SHI, AICHI-KEN, 471-8571 (JP); SHIRAI, Ryo, TOYOTA-SHI, AICHI-KEN, 471-8571 (JP)
(74) Representative: Cabinet Beau de Loménie

(57) **Abstract**

A warning device (10) includes a calculation part (11) configured to output a warning to a driver. The calculation part (11) is configured to acquire monitoring information obtained by monitoring the driver during driving of a vehicle (1), recognize a predetermined action for resisting drowsiness by the driver based on the monitoring information, and output the warning from an output part (3) when two or more types of the predetermined actions are present within a predetermined time.

## Description

### TECHNICAL FIELD

The present invention relates to a warning device, a warning method, and a computer program for outputting a warning to a driver of a vehicle.

### BACKGROUND ART

Patent Literature 1 discloses a device for preventing drowsy driving, which outputs a warning sound when it is judged that a user is drowsy while driving. This prevention device is configured to judge the first stage, which is a precursor action of drowsiness, based on recognition contents of the face and head of the driver while the vehicle is moving forward, when the presence or absence of a second stage, which is a completed action of drowsiness, is judged, judge that the action of drowsiness is present, and output a warning sound.

### CITATION LIST

### PATENT LITERATURE

PTL 1 Japanese Unexamined PCT Publication (Kohyo) No. 2016-539446

### SUMMARY

### TECHNICAL PROBLEM

According to the technology described in Patent Literature 1, the first stage, which is a precursor action of drowsiness of the driver, is detected based on the state of the head of the driver, such as yawning, nodding (head movement), and blinking. Among precursor actions of drowsiness, nodding is known to be an action which occurs when a person experiences strong drowsiness. According to the technology described in Patent Literature 1, when the driver is wearing accessories such as sunglasses or a mask, information regarding yawning and blinking is not recognized due to the accessories, and the first stage, which is a precursor action of drowsiness of the driver, is judged based on the nodding action, and there is a risk that a warning will be output after the driver experiences strong drowsiness.

An object of the present invention is to provide a warning device, a warning method, and a computer program capable of outputting a predetermined warning prior to a driver experiencing drowsiness equal to or stronger than a predetermined level.

### SOLUTION TO PROBLEM

One aspect of the present invention provides a warning device, comprising a calculation part configured to output a warning to a driver, wherein the calculation part is configured to acquire monitoring information obtained by monitoring the driver during driving of a vehicle, recognize a predetermined action for resisting drowsiness by the driver based on the monitoring information, and output the warning from an output part when two or more types of the predetermined actions are present within a predetermined time.

### ADVANTAGEOUS EFFECTS OF INVENTION

According to the present invention, a predetermined warning can be output prior to a driver experiencing drowsiness equal to or stronger than a predetermined level.

### BRIEF DESCRIPTION OF DRAWINGS

FIG. 1 is a block diagram showing the configuration of a vehicle according to an embodiment.
FIG. 2 is a top view showing a method for monitoring the state of a driver.
FIG. 3 is a view for classifying contents of predetermined actions and microsleep actions.
FIG. 4 is a flowchart showing the flow of processing of a warning method executed in a warning device.

### DESCRIPTION OF EMBODIMENTS

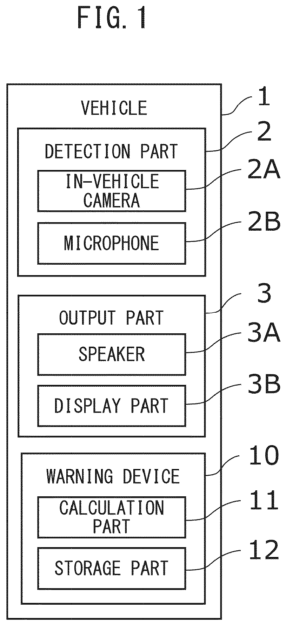

As shown in FIG. 1, the vehicle 1 includes a detection part 2 for monitoring a driver inside the vehicle. The detection part 2 includes, for example, an in-vehicle camera 2A which is capable of capturing the driver. The in-vehicle camera 2A is provided at a position where it is capable of capturing the state of the face of the driver and actions of the driver. The in-vehicle camera 2A generates a captured image in which the driver is captured as monitoring information. The detection part 2 includes a microphone 2B which is capable of recording voice inside the vehicle. The microphone 2B generates, for example, voice data emitted by the driver as monitoring information. The detection part 2 may be configured as a functional part of a driving assistance device (not illustrated) for performing driving support in the vehicle 1.

The vehicle 1 includes an output part 3 which is capable of outputting information. The output part 3 includes, for example, a speaker 3A which is capable of outputting audio information. The speaker 3A outputs a predetermined warning to the driver based on audio, for example, as will be described later. The output part 3 includes, for example, a display part 3B which is capable of displaying information. The display part 3B is constituted by a display device such as a liquid crystal display. The display part 3B may be constituted by a touch panel by means of which information can be input. The output part 3 may be constituted by an information processing device which provides various functions such as a navigation device and an audio device provided in the vehicle 1. The output part 3 may also include a device which provides stimulus to the driver, such as a vibration generating device (not illustrated) provided in the seat and which provides vibration stimulus to the driver.

The vehicle 1 includes a warning device 10 for outputting a predetermined warning to the driver. The warning device 10 includes a calculation part 11 for judging drowsiness of the driver based on monitoring information. The calculation part 11 is constituted by, for example, at least one hardware processor such as a central processing unit (CPU). The calculation part 11 may be realized by hardware (including circuitry) such as a large scale integration (LSI), an application specific integrated circuit (ASIC), a field programmable gate array (FPGA), or a graphics processing unit (GPU), or may be realized by cooperation between software and hardware.

The calculation part 11 is configured to perform machine learning such as deep learning using teacher data in advance, recognize the state of the driver based on monitoring information acquired from the detection part 2, and judge whether the driver is experiencing drowsiness. The calculation part 11 recognizes the state of the driver based on the captured image acquired from the in-vehicle camera 2A. The calculation part 11 recognizes the state of the driver based on the voice data acquired from the microphone 2B. The processing of the calculation part 11 will be described later.

The warning device 10 includes a storage part 12 for storing data and computer programs necessary for calculations. The storage part 12 is composed of a non-transitory storage medium such as a hard disk drive (HDD) or a solid-state disk (SSD). The computer program may be stored in the storage part 12 in advance, or may be stored in a removable storage medium and installed in the storage part 12 by connecting the storage medium (non-transitory storage medium). The storage part 12 constantly stores monitoring information. Unnecessary past monitoring information stored in the storage part 12 is erased at a predetermined timing.

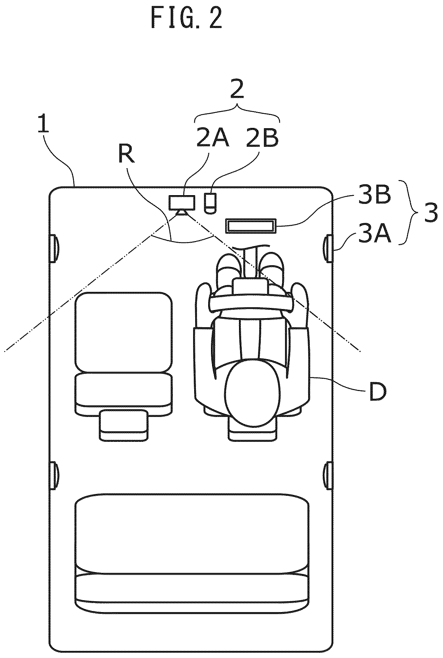

As shown in FIG. 2, the in-vehicle camera 2A is provided at a position for capturing the interior of the vehicle 1 including the driver D during driving the vehicle 1. The in-vehicle camera 2A captures the driver in an imaging range R in which a head area including the face of the driver D and a body area can be captured. The in-vehicle camera 2A generates captured image data capturing movement of the head, the state of the face, and the state of the body of the driver D, and outputs the captured image data to the warning device 10. The microphone 2B is provided at a position where the voice emitted by the driver D is input thereto. The microphone 2B receives as input the voice emitted by the driver D and outputs the voice data to the warning device 10.

The speaker 3A is provided at a position where the driver D can hear audio information. One or more speakers 3A may be provided in the vehicle. The speaker 3A may be shared with an audio device or other device for outputting audio. The speaker 3A outputs a warning based on audio generated by the warning device 10, as will be described later, which can be recognized by the driver D. The display part 3B is provided at a position where it can be seen by the driver D. The display part 3B outputs a warning based on an image generated by the warning device 10, as will be described later, which can be seen by the driver D.

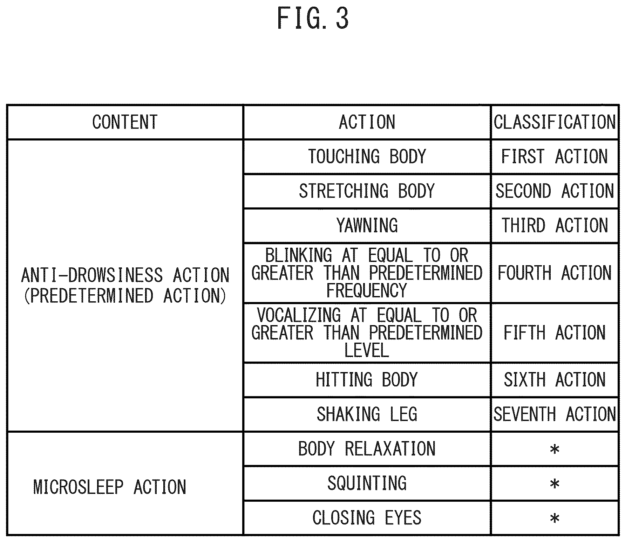

As shown in FIG. 3, the actions taken when the driver D experiences drowsiness are classified. It is known that the driver D performs various microsleep actions as drowsiness progresses. Microsleep actions include, for example, actions such as nodding in a state in which the body is relaxed, a squinting state in which the eyelids equal to or greater than halfway closed, and a closed-eye state in which the eyelids are completely closed. Microsleep actions represent a state in which drowsiness progresses, and are difficult to detect when the driver D is wearing a headgear such as sunglasses.

It is known that when the driver D driving the vehicle 1 experiences drowsiness, they will take a predetermined action to resist the drowsiness in early stages before microsleep actions. Such predetermined actions include a first action in which the driver D touches his or her body including the head area. The first action is, for example, a contact action such as touching the facial area around the eyes, stimulating the head, or touching the body. The predetermined actions include a second action of stretching the body. The second action is, for example, a stretching action such as an action of stretching the upper body or an action of stretching the arms.

The predetermined actions include a third action in which the driver D yawns. The third action is, for example, a yawning action in which the driver D yawns, including vocalization. The predetermined actions include a fourth action in which the driver D blinks at equal to or greater than a predetermined frequency. The fourth action is, for example, a fast-blinking action in which the driver D intentionally blinks at a predetermined frequency equal to or greater than normal blinking. The predetermined actions include a fifth action in which the driver D vocalizes at equal to or greater than a predetermined level. The fifth action is, for example, a vocalization action in which the driver D vocalizes at equal to or greater than a predetermined sound level to resist drowsiness. The predetermined actions include a sixth action in which the driver D hits his or her body. The predetermined actions include a seventh action in which the driver D shakes his or her leg.

The calculation part 11 is configured to recognize various the predetermined actions prior to the microsleep action, and output a warning to the driver D. The calculation part 11 acquires the monitoring information of the driver D driving the vehicle 1 from the detection part 2. The calculation part 11 judges whether or not there is a predetermined action for resisting drowsiness by the driver based on the monitoring information. The calculation part 11 analyzes the captured image acquired from the in-vehicle camera 2A and monitors the state of the driver D. The calculation part 11 analyzes the voice information acquired from the microphone 2B and monitors the state of the driver D.

When the first action in which the driver touches his or her body including the head area is recognized, the calculation part 11 judges that the driver D is performing a predetermined action. When the second action of stretching the body is recognized, the calculation part 11 judges that the driver D is performing a predetermined action. When the third action of the driver D yawning is recognized, the calculation part 11 judges that the driver D is performing a predetermined action. When the fourth action of blinking at equal to or greater than a predetermined frequency is recognized, the calculation part 11 judges that the driver D is performing a predetermined action.

When the fifth action in which the driver D vocalizes at equal to or greater than a predetermined level is recognized, the calculation part 11 judges that the driver D is performing a predetermined action. When the sixth action in which the driver D hits his or her body is recognized, the calculation part 11 judges that the driver D is performing a predetermined action. When the seventh action in which the driver D shakes his or her leg is recognized, the calculation part 11 judges that the driver D is performing a predetermined action.

When the calculation part 11 judges that the driver D has performed two or more types of predetermined actions within a predetermined time, a warning is output from the output part 3. When the calculation part 11 recognizes two or more types of predetermined actions within a predetermined time, for example, 10 minutes, a warning is output. For example, the calculation part 11 generates a warning based on audio information for alerting the driver D to drowsiness or audio information for encouraging the driver D to rest, and outputs the warning from the speaker 3A.

The calculation part 11 generates a warning based on image information for alerting the driver D to drowsiness and image information for encouraging the driver D to rest, and displays the warning on the display part 3B. The calculation part 11 may output a warning based on audio information output from the speaker 3A and a warning based on image information output from the display part 3B in conjunction with each other.

When the calculation part 11 outputs a warning, it may output a subsequent warning after a predetermined time, for example, 30 minutes, has elapsed. Based on the processing described above, the driver D can be prevented from feeling annoyed when excessive warnings are output. Since the calculation part 11 recognizes two or more types of predetermined actions, the warning can be prevented from being output immediately when the driver D performs an action of simply touching the head, rather than a predetermined action, thus preventing the driver D from feeling annoyed.

In the case in which a microsleep action when the driver experiences drowsiness is recognized, the calculation part 11 judges that it is not a predetermined action. When the driver performs any of a nodding action, a squinting action, and an eye-closing action, the calculation part 11 judges that the action is a microsleep action, not a predetermined action. When a microsleep action is recognized, since drowsiness of the driver D is progressing, driving support control such as deceleration, stopping, and avoidance operation of the vehicle 1, which can ensure safety more so than outputting of a warning, may be executed.

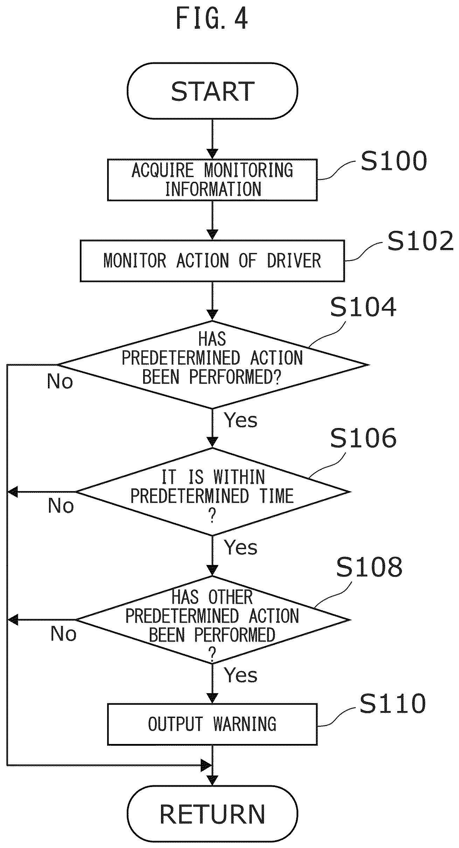

FIG. 4 shows the flow of processing of a warning method executed in the warning device 10 for outputting a warning to the driver. The warning method is executed based on a computer program installed in a computer mounted on the warning device 10. The computer program causes the computer mounted on the warning device 10 to execute the following processing.

The calculation part 11 of the warning device 10 acquires the monitoring information from the detection part 2 which monitors the driver D during driving of the vehicle 1 (S100). The calculation part 11 analyzes the captured image of the in-vehicle camera 2A and the audio data of the microphone 2B to monitor the action of the driver D (S102). Based on the monitoring information, the calculation part 11 judges whether the driver is performing a predetermined action for resisting drowsiness (S104). When it is judged that the driver D is performing any one of the actions included in the predetermined actions (S104: Yes), the calculation part 11 judges whether a predetermined time has elapsed since the time when the action was recognized (S106).

In the case in which the predetermined time has elapsed since the time the action was recognized (S106: Yes), the calculation part 11 judges whether the driver D is performing a predetermined action different from the previously recognized predetermined action (S108). When the driver D is performing a predetermined action different from the previously recognized predetermined action (S108: Yes), and specifically, when two or more types of predetermined actions have been performed within the predetermined time, the calculation part 11 causes the output part 3 to output a warning (S110).

As described above, according to the warning device 10, since predetermined actions for resisting drowsiness by the driver D during driving of the vehicle 1 are recognized, a predetermined warning can be output prior to the driver experiencing drowsiness equal to or stronger than a predetermined level. According to the warning device 10, even when the driver D is wearing an attachment on his or her head, since predetermined actions for resisting drowsiness by the driver D are recognized, a predetermined warning can be output. According to the warning device 10, by recognizing predetermined actions performed prior to the driver D performing microsleep actions, in which the driver D experiences strong drowsiness, a predetermined warning can be output at a stage in which the driver D experiences weak drowsiness. According to the warning device 10, since a warning is output after two or more types of predetermined actions are recognized, the driver D can be prevented from feeling annoyed by the warning.

In the embodiments described above, the computer program executed in each component of the warning device 10 may be provided in a form recorded on a computer-readable portable non-transitory recording medium such as a semiconductor memory, a magnetic recording medium, or an optical recording medium. A computer program product including the computer program according to the embodiments described above may be provided in a form stored on a storage medium or via communication line.

### REFERENCE SIGNS LIST

1 vehicle, 2 detection part, 2A in-vehicle camera, 2B microphone, 3 output part, 3A speaker, 3B display part, 10 warning device, 11 calculation part, 12 storage part, D driver, R imaging range

## Claims

1. A warning device (10) comprising a calculation part (11) configured to output a warning to a driver (D), wherein
the calculation part (11) is configured to:
acquire monitoring information obtained by monitoring the driver (D) during driving of a vehicle (1),
recognize a predetermined action for resisting drowsiness by the driver (D) based on the monitoring information, and
output the warning from an output part (3) when two or more types of the predetermined actions are present within a predetermined time.

2. The warning device (10) according to claim 1, wherein the calculation part (11) is configured to judge that the driver (D) is performing the predetermined action when recognizing a first action in which the driver (D) touches his or her body including a head area or a second action in which the driver (D) stretches his or her body.

3. The warning device (10) according to claim 1 or 2, wherein the calculation part (11) is configured to judge that the driver (D) is performing the predetermined action when recognizing a third action in which the driver (D) yawns or a fourth action in which the driver (D) blinks at equal to or greater than a predetermined frequency.

4. The warning device (10) according to any one of claims 1 to 3, wherein the calculation part (11) is configured to judge that the driver (D) is performing the predetermined action when recognizing a fifth action in which the driver (D) vocalizes at equal to or greater than a predetermined level.

5. The warning device (10) according to any one of claims 1 to 4, wherein the calculation part (11) is configured to judge that the driver (D) is performing the predetermined action when recognizing a sixth action in which the driver (D) hits his or her body or a seventh action in which the driver (D) shakes his or her leg.

6. The warning device (10) according to any one of claims 1 to 5, wherein the calculation part (11) is configured to judge that the predetermined action has not been performed when recognizing a microsleep action when the driver (D) experiences drowsiness.

7. The warning device (10) according to claim 6, wherein the calculation part (11) is configured to judge that the microsleep action is present when the driver (D) performs any action among a nodding action, a squinting action, and an eye-closing action.

8. A warning method for outputting a warning to a driver (D), causing a computer to execute processing to:
acquire monitoring information obtained by monitoring the driver (D) during driving of a vehicle (1),
recognize a predetermined action for resisting drowsiness by the driver (D) based on the monitoring information, and
output the warning from an output part (3) when two or more types of the predetermined actions are present within a predetermined time.

9. A computer program for causing a computer to execute a warning method for outputting a warning to a driver (D), the computer program causing a computer to execute processing to:
acquire monitoring information obtained by monitoring the driver (D) during driving of a vehicle (1),
recognize a predetermined action for resisting drowsiness by the driver (D) based on the monitoring information, and
output the warning from an output part (3) when two or more types of the predetermined actions are present within a predetermined time.
